# EUROPEAN PATENT APPLICATION

(11) **EP 1 647 739 A2**
(43) Date of publication of application: **19.04.2006**
(21) Application number: 05022110.0
(22) Date of filing: 11.10.2005
(51) Int. Cl.: F16H 7/18

(54) **Chain guide**

(30) Priority: 12.10.2004 JP 2004297364; 25.08.2005 US 211193
(71) Applicant: BorgWarner Morse TEC Japan K.K., Nabari, Mie 518-0495 (JP)
(72) Inventor: Nakata, Satoshi BorgWarner Morse Tec Japan K.K., Nabara-shi Mie 518-0495 (JP)
(74) Representative: Petruzziello, Aldo

(57) **Abstract**

A chain guide (1) improves bending rigidity while satisfying requirements for compactness and weight reduction of an engine and restricting cost increases. The chain guide (1) includes a guide body (2) having an engaging protrusion (25) capable of engaging with a long engaging hole (51) formed in an engine block in a longitudinally slidable manner and a shoe (3) fixed over the guide body (2) and having a chain sliding surface (30). In this case, an upward support of the engaging protrusion (25) of the guide body (2) in the engaging hole (51) of the engine block results in an increase in the bending rigidity of the whole chain guide (1). Moreover, the engaging protrusion (25) of the guide body (2) is only inserted into the engaging hole (51) of the engine block. This does not cause an increase in size and weight, and causes only a slight change of a mold, leading to less cost increases.

## Description

### REFERENCE TO RELATED APPLICATIONS

This application claims an invention which was disclosed in Japanese application number 2004-297364, filed October 12, 2004, entitled "CHAIN GUIDE". The benefit under 35 USC§119(a) of the Japanese application is hereby claimed, and the aforementioned application is hereby incorporated herein by reference.

### BACKGROUND OF THE INVENTION

### FIELD OF THE INVENTION

The present invention relates to a chain guide, and more particularly, to an improvement in the structure of the chain guide to increase the bending rigidity.

### DESCRIPTION OF RELATED ART

Generally, in a timing chain system in use for driving a valve system in an internal combustion engine or a chain system in use for drivingly connecting one camshaft to another camshaft, a tensioner arm is provided on a slack side of a chain to take up slack in the chain and a chain guide is provided on a tight side of the chain to guide the travel of the chain, as shown in Japanese patent application laid-open publication No. 2004-60782.

A chain guide typically includes a guide body with a pair of attachment holes formed on the opposite sides thereof for insertion of attachment bolts. The guide body is fixedly attached to the engine through the attachment bolts inserted into the attachment holes.

During operation of a chain, the chain travels along a chain sliding surface of the guide body so that travel of the chain is guided by the chain guide. Also, during operation, the chain presses against the chain guide, which requires a certain degree of bending rigidity of the chain guide. A method for increasing the bending rigidity of the chain guide may alter a cross-sectional shape of the guide body to increase the moment of inertia of area of the guide body.

However, such a method contradicts the need for small-sized and lightweight engines. Also, it requires considerable changes in the molds for the chain guide, thus increasing the manufacturing cost.

The present invention provides a chain guide that increases the bending rigidity and satisfies the demand for a small-sized and lightweight engine, while limiting cost increases.

### SUMMARY OF THE INVENTION

A chain guide in one embodiment of the present invention includes a guide body with a chain sliding surface. The guide body has an engaging protrusion engageable with an engagement hole formed in an installation surface on the engine. According to one aspect of the present invention, since the guide body of the chain guide is supported by the engagement hole on the side of the engine through the engaging protrusion inserted into the engagement hole, when a chain applies a compressive force to the chain guide, the bending rigidity of the entire chain guide increases.

Moreover, since the engaging protrusion of the guide body merely engages with the engagement hole formed on the installation surface of the engine, increased cost is limited and the size and the weight of the entire chain guide is not increased. Alteration of the molds for the chain guide is also simplified.

The engagement hole on the engine is preferably an elongated aperture extending along the length of the guide body. The elongated aperture absorbs thermal expansion of the guide body.

The engaging protrusion is preferably solid-cylindrical shaped or prismatic shaped. Also, the engaging protrusion of the guide body is preferably centrally disposed in the elongated direction of the guide body.

A chain guide according to another embodiment of the present invention includes a guide body with a chain sliding surface. The guide body has an engagement hole adapted to be engageable with an engaging protrusion provided on an installation surface on the engine.

In another embodiment of the present invention, since the guide body of the chain guide is supported by the engaging protrusion on the engine inserted into the engagement hole in the guide body, when a chain applies compressive force to the chain guide, the bending rigidity of the entire chain guide is increased. Moreover, since the engaging protrusion on the side of the engine merely engages with the engagement hole formed in the guide body, an increase in cost is restrained without increasing the size or the weight of the entire chain guide. The alteration of the molds for the chain guide is also simplified.

The engagement hole of the guide body is preferably an elongated aperture extending along the length of the guide body. The elongated aperture absorbs thermal expansion of the guide body.

The engagement hole of the guide body is preferably centrally disposed in the elongated direction of the guide body.

A chain guide in another embodiment of the present invention includes a guide body with a chain sliding surface. The guide body is supported from below by a support provided at the installation surface on the engine.

Since the guide body of the chain guide is supported by the support on the engine, when a chain applies compressive force to the chain guide, the bending rigidity of the entire chain guide is increased. Moreover, since the support is merely provided on the installation surface on the engine, increased cost is limited without substantially increasing the size or the weight of the entire chain guide or altering the molds for the chain guide. Furthermore, since the support on the engine merely contacts the guide body from below, thermal expansion of the guide body is not restricted. The support on the engine is preferably a plate-like protrusion that protrudes from the installation surface and contacts the bottom surface of the guide body from below. The guide body is preferably made of synthetic resin.

### BRIEF DESCRIPTION OF THE DRAWINGS

FIG. 1A is a schematic top plan view of the chain guide according to a first embodiment of the present invention.
FIG. 1B is a schematic front elevational view of the chain guide of FIG. 1A.
FIG. 1C is a sectional view taken along line C₁-C₁ of FIG. 1A.
FIG. 2A is a schematic top plan view of the chain guide according to a second embodiment of the present invention.
FIG. 2B is a schematic front elevational view of the chain guide of FIG. 2A.
FIG. 2C is a sectional view taken along line C₂-C₂ of FIG. 2A.
FIG. 3A is a schematic top plan view of the chain guide according to a third embodiment of the present invention.
FIG. 3B is a schematic front elevational view of the chain guide of FIG. 3A.
FIG. 3C is a sectional view taken along line C₃-C₃ of FIG. 3A.

### DETAILED DESCRIPTION OF THE INVENTION

### First Embodiment

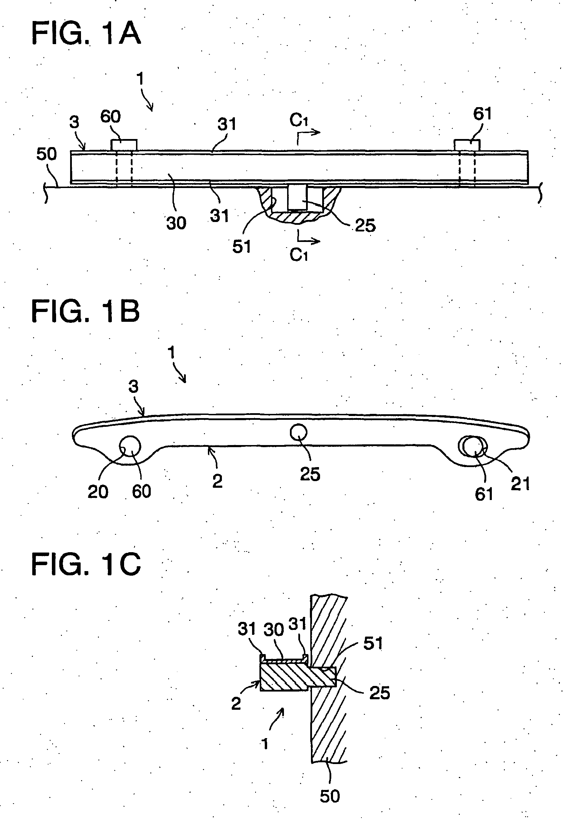

As shown in FIGS. 1A to 1C, a chain guide 1 includes a guide body 2. The guide body is preferably formed of synthetic resin, aluminum die cast, or the like. The chain guide 1 also includes a shoe 3 preferably formed of synthetic resin or the like, which is fixedly attached on or integrated with the guide body 2.

A pair of bolt holes 20, 21 are formed at opposite end portions of the guide body 2 to receive installation bolts 60, 61 to install the chain guide 1 on an engine part such as an engine block (or engine front cover) 50. The bolt hole 21 is preferably an elongated aperture extending along the length of the guide body 2, in the left and right direction of FIG. 1B, in order to absorb thermal expansion of the guide body 2 due to elevated temperatures in the engine during operation.

An engaging protrusion 25 that protrudes sideways from the guide body 2 is provided at the central position in the elongated direction of the guide body 2. The engaging protrusion is preferably a solid cylindrical protrusion or a prismatic protrusion. An elongated engagement hole along the length of the guide body 2 is formed on the installation surface of the engine block 50, which is disposed opposite the guide body 2. The engaging protrusion 25 of the guide body 2 engages with the engagement hole 51 on the engine block.

As shown in FIG. 1C, there is not any clearance provided vertically in the engagement hole and a clearance is provided only in the elongated direction of the guide body 2 between the engaging protrusion 25 and the engagement hole 51. A vertical clearance is not provided because the guide body 2 needs to be supported by the engine block 50 from below, during operation. A longitudinal clearance is provided to absorb thermal longitudinal expansion of the guide body.

The shoe preferably includes a longitudinally extending chain sliding surface 30 and a pair of upraised sidewalls 31 on opposite sides of the chain sliding surface 30.

In operation, a chain (not shown) slides on the chain sliding surface 30 of the shoe 3 and during that time the travel of the chain is guided by the sidewalls 31 of the shoe 3.

Also, during operation, a compressive force from the chain, caused by a chain tension and vibration of a chain span, is imparted to the guide body sliding surface 30 of the shoe 3. The guide body 2 is not only mounted to the engine block 50 through the attachment bolts 60, 61, it is also supported through the engagement of the engaging protrusion 25 with the engagement hole 51 of the engine block. Thereby, the bending rigidity of the entire chain guide 1 increases to restrain bending of the chain guide 1 in the vertical direction. The engaging protrusion 25 provided on the guide body 2 merely engages with the engagement hole 51. Thus, an increase in costs is restrained without increasing the size and the weight of the entire chain guide and with only a slight alteration of the mold for the chain guide.

### Second Embodiment

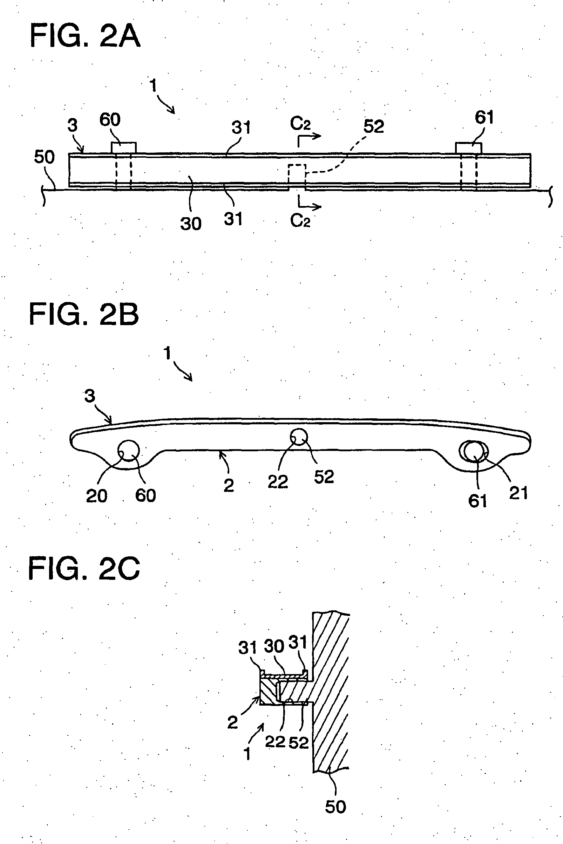

FIGS. 2A to 2C show a second embodiment of the present invention. In these drawings, like reference numbers indicate identical or functionally similar elements.

In the second embodiment, in contrast to the first embodiment, an engaging protrusion 52 is preferably provided on the side of the engine block 50 and an engagement hole 22 engageable with the engaging protrusion 52 is preferably formed at a central position of the guide body 2 in the elongated direction. The engaging protrusion 52 is preferably a solid cylindrical protrusion or a prismatic protrusion. In operation, when the chain imparts compressive force, the guide body 2 is supported by the engaging protrusion 52 of the engine block 50 and thus the bending rigidity of the entire chain guide increases similar to the first embodiment of the present invention. Moreover, since the engaging protrusion 52 of the engine block 50 is merely inserted into the engagement hole 22 of the guide body 2, cost increases are limited without increasing the size and the weight of the entire chain guide. Only a slight alteration of the molds for the chain guide is required.

In addition, the engagement hole 22 of the guide body 2 may be an elongated aperture extending along the length of the guide body 2. In this case, thermal expansion of the 25 guide body 2 is absorbed by the elongated aperture 22.

### Third Embodiment

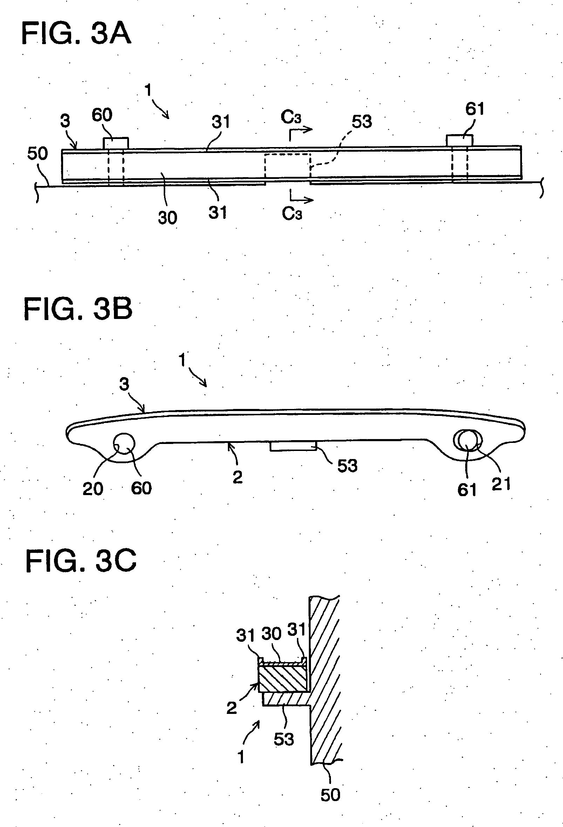

FIGS. 3A to 3C show a third embodiment of the present invention. In these drawings, like reference numbers indicate identical or functionally similar elements.

In the third embodiment, in contrast to the first and second embodiments, a plate-like protrusion 53 is formed on the side of the engine block 50 and the lower surface of the guide body 2 is supported from below by the plate-like protrusion 53.

In operation, when the chain imparts compressive force, the guide body 2 is supported by the plate-like protrusion 53 of the engine block 50 and thus the bending rigidity of the entire chain guide increases similar to the first and second embodiments of the present invention. Moreover, since the plate-like protrusion 53 is merely provided on the engine block 50, an increase in costs is restrained without substantially increasing the size and the weight of the entire chain guide and without altering the molds for the chain guide. Also, thermal expansion of the guide body 2 is not restricted because the plate-like protrusion 53 of the engine block 50 merely contacts the guide body 2 from below.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A chain guide for guiding a travel of a chain for a power transmission, comprising a guide body having a chain sliding surface, wherein the guide body comprises an engaging protrusion capable of engaging with an engaging hole formed in a mounting surface of an engine.

2. The chain guide of claim 1, wherein the engaging hole extends along a longitudinal direction of the guide body.

3. The chain guide of claim 1, wherein the engaging protrusion is selected from the group consisting of a cylindrical protrusion and a prismatic protrusion.

4. The chain guide of claim 1, wherein the engaging protrusion is located in a middle portion of the guide body along a longitudinal direction of the guide body.

5. The chain guide of claim 1, wherein the guide body is made of synthetic resin.

6. A chain guide for guiding a travel of a chain for power transmission, comprising a guide body having a chain sliding surface and an engaging hole capable of engaging with an engaging protrusion provided in a mounting surface of an engine.

7. The chain guide of claim 6, wherein the engaging hole extends along a longitudinal direction of the guide body.

8. The chain guide of claim 6, wherein the engaging hole is arranged in a middle portion of the guide body along a longitudinal direction of the guide body.

9. The chain guide of claim 6, wherein the guide body is made of synthetic resin.

10. The chain guide of claim 6, wherein the engaging protrusion is selected from the group consisting of a cylindrical protrusion and a prismatic protrusion.

11. A chain guide for guiding a travel of a chain for power transmission, comprising a guide body having a chain slide surface, wherein the guide body is supported from below by a support section provided on a mounting surface of an engine.

12. The chain guide of claim 11, wherein the support section protrudes from the mounting surface and comprises a plate protrusion in contact with a bottom of the guide body.

13. The chain guide of claim 11, wherein the guide body is made of synthetic resin.
